Europäisches Patentamt

**European Patent Office**

Office européen des brevets

(19)

(11) Numéro de publication: **0 246 961 B1**

(12) **FASCICULE DE BREVET EUROPEEN**

(45) Date de publication de fascicule du brevet: **15.04.92** (51) Int. Cl.<sup>5</sup>: **G02B 6/44**

(21) Numéro de dépôt: **87401113.3**

(22) Date de dépôt: **15.05.87**

(54) Equipement de répartition et raccordement de fibres optiques.

(30) Priorité: **16.05.86 FR 8607059**

(43) Date de publication de la demande:
**25.11.87 Bulletin 87/48**

(45) Mention de la délivrance du brevet:
**15.04.92 Bulletin 92/16**

(84) Etats contractants désignés:
**BE CH DE GB IT LI NL SE**

(56) Documents cités:
**EP-A- 0 043 570**
**EP-A- 0 105 597**
**DE-A- 2 505 027**
**DE-A- 3 148 614**
**FR-A- 881 764**

**PATENT ABSTRACTS OF JAPAN, vol. 9, no. 323 (P-414)[2046], 18 décembre 1985; & JP-A-60 149 010**

**PATENT ABSTRACTS OF JAPAN, vol. 7, no. 198 (P-220)[1343], 2 septembre 1983; & JP-A-58 98 714**

(73) Titulaire: **SAT Société Anonyme de Télécommunications**
**41, rue Cantagrel**
**F-75631 Paris Cedex 13(FR)**

Titulaire: **SOCIETE INDUSTRIELLE DE LIAISONS ELECTRIOUES (SILEC)**
**64 bis, rue de Monceau**
**F-75008 Paris(FR)**

(72) Inventeur: **Suillerot, Didier, Maurice, René**
**41, rue Cantagrel**
**F-75631 Paris Cedex 13(FR)**
Inventeur: **Violo, Robert, Dominique**
**41, rue Cantagrel**
**F-75631 Paris Cedex 13(FR)**

(74) Mandataire: **Cabinet Martinet & Lapoux**
**BP 405**
**F-78055 Saint Ouentin en Yvelines Cédex(FR)**

Rank Xerox (UK) Business Services

## Description

La présente invention concerne un équipement pour répartir et raccorder des premières fibres optiques sortant de premiers câbles respectivement à des secondes fibres optiques sortant de seconds câbles au moyen de connecteurs connectant chacun une extrémité d'une première fibre respective à une extrémité d'une seconde fibre respective. En particulier, l'invention a trait à un équipement sous la forme d'une boîte ou d'un coffret dans lequel il est possible d'effectuer des brassages de fibres consistant à modifier les connexions entre premières et secondes fibres optiques.

Dans de tels équipements, les connecteurs fibre à fibre sont généralement sous la forme de petits boîtiers plats ou cylindriques et sont juxtaposés en une rangée rectiligne fixée sur un support tel que le fond de la boîte. Les extrémités des premières fibres sont introduites dans les connecteurs par un côté de la rangée de connecteurs, et les extrémités des secondes fibres sont introduites dans les connecteurs par l'autre côté de la rangée. En général, les fibres sont lovées en des boucles de réserve après leur sortie des câbles et avant leur introduction dans les connecteurs. Les boucles de réserve des premières et secondes fibres sont disposées soit respectivement de part et d'autre de la rangée de connecteurs entre des parois extrêmes parallèles de la boîte à travers lesquelles pénètrent les câbles par l'intermédiaire de presse-étoupes, soit latéralement à la rangée de connecteurs. Une boucle de réserve permet de disposer d'une surlongueur de fibre afin de pallier à d'éventuels incidents lors d'opérations de connexion impliquant une coupe d'un tronçon extrême de la fibre.

Dans tous les cas, les fibres sont introduites perpendiculairement à la rangée de connecteur, et donc parallèlement entre elles dans les connecteurs. Puisque les premières, respectivement les secondes fibres suivent sensiblement un même trajet dans l'équipement entre la sortie des câbles et la rangée des connecteurs, il est nécessaire de prévoir des longueurs différentes des fibres avant leur introduction dans les connecteurs respectifs, afin d'éviter qu'une extrémité de fibre ne puisse atteindre le connecteur dans lequel elle doit être insérée. Cette différence de longueur est d'autant plus prononcée que le nombre de connecteurs pouvant atteindre 100 à 200 est élevé. Si une telle disposition n'est pas effectuée lors de la préparation des fibres, par exemple si toutes les fibres sont coupées pour avoir une longueur permettant l'introduction d'une fibre quelconque dans le connecteur le plus éloigné de l'endroit où le faisceau de fibre éclate en direction des connecteurs, les fibres introduites dans les connecteurs les plus proches de l'endroit d'éclatement du faisceau présentent des surlongueurs encombrantes qui provoquent un emmêlement des fibres et un risque de fissures et cassures de fibres.

Ces inconvénients se présentent à nouveau lorsque l'on désire modifier les connexions entre premières et secondes fibres. Par exemple, comme c'est généralement le cas en pratique, les premières fibres sont assignées une fois pour toute à des connecteurs prédéterminés, et des secondes fibres peuvent être introduites dans des connecteurs encore disponibles ou être interchangés avec d'autres secondes fibres, en fonction des besoins d'exploitation. On conçoit que le retrait d'une libre d'un connecteur situé à une extrémité de la rangée de connecteurs en vue de l'introduction de cette fibre dans un autre connecteur à l'autre extrémité de la rangée de connecteurs est malaisée, et nécessite des manipulations des autres fibres avec risque d'emmêlement et de détérioration des autres fibres afin d'accéder aux deux connecteurs. Un équipement différent de ceux du type décrits ci-dessus est divulgué dans la DE-A-25-05-027.

Selon les Fig. 5 et 6 de cette demande de brevet, une partie centrale cylindrique d'un corps de révolution comporte des rainures périphériques parallèles à l'axe du corps pour recevoir des petits tubes constituant des connecteurs fibre-à-fibre, raccordant des extrémités de premières et secondes fibres optiques. Les extrémités du corps de révolution sont des troncs de cône coaxiaux convergeant respectivement vers des premiers et seconds câbles à fibres optiques. Les premières et secondes fibres sont épanouies en sortie des câbles dans des rainures périphériques longitudinales ménagées sur les troncs du cône et sont maintenues par des bagues à alisage troncônique. Ainsi, les rainures d'épanouissement et les connecteurs sont disposés selon des sections coaxiales transversales d'un double cône. De la même manière que dans des équipements incluant des connecteurs disposés en rangée rectiligne, il doit être prévu des boucles de réserve de fibre entre les rainures d'épanouissement et les connecteurs. Ces boucles présentent des surlongueurs pour connecter par exemple deux fibres sortant de rainures d'épanouissement diamétralement et diagonalement opposées. On conçoit alors dans ce dernier cas, que le cheminement de l'une des deux fibres, autour du corps cylindrique et vers un connecteur diamétralement opposé, accroît l'enmêlement et la détèrioration des autres fibres.

La présente invention vise à remédier aux inconvénients précités, et plus particulièrement à permettre un brassage aisé des secondes fibres en conservant à celles-ci des longueurs pratiquement égales.

A cette fin, la présente invention a pour object un équipement tel que défini dans la revendication 1.

Les secondes fibres sont ainsi rassemblées au centre d'une zone circulaire, qui peut être délimitée par un ou plusieurs segments de couronne et/ou plusieurs couronnes coaxiales, de préférence superposés, le long desquels sont répartis les connecteurs. Cette répartition circulaire des connecteurs permet d'introduire n'importe quelle extrémité de seconde fibre dans n'importe quelle seconde extrémité de connecteur sans modifier la longueur de la seconde fibre ou courber plus que nécessaire cette seconde fibre. En effet, entre le retrait d'une seconde fibre d'un connecteur et l'insertion de cette seconde fibre dans un autre connecteur n'intervient qu'un balayage du secteur entre ces deux connecteurs par le tronçon extrême de la seconde fibre tournant autour de l'axe central de la zone circulaire. Le rassemblement des secondes fibres est obtenu au moyen du disque de répartition qui est coaxial à la zone circulaire et à travers lequel passent les secondes fibres.

Selon une autre caractéristique de l'invention, chaque segment de couronne ou chaque couronne est une glissière circulaire sur laquelle sont montés à coulissement des connecteurs. Le coulissement des connecteurs permet de dégager un espace d'accès convenable autour d'un connecteur lors de l'introduction d'une extrémité de fibre dans ce connecteur.

En pratique, lorsque la capacité de raccordement de l'équipement est élevée, deux ou trois glissières circulaires coaxiales et superposées sont prévues. L'accès aux connecteurs sur les glissières inférieures est facilitée par une disposition des glissières circulaires qui forment tout ou partie de sections parallèles transversales d'une surface de révolution, telle que celle d'un tronc de cône ou d'une calotte sphérique.

D'autres caractéristiques de l'équipement selon l'invention sont définies dans les revendications 5 à 10.

D'autres avantages de l'invention apparaîtront plus clairement à la lecture de la description suivante de plusieurs réalisations préférées de l'invention en référence aux dessins annexés correspondants dans lesquels :

- la Fig.1 est une vue de dessus schématique d'un équipement de répartition et de raccordement de grande capacité selon une première réalisation, un couvercle de l'équipement étant ôté ;
- la Fig.2 est une vue longitudinale en coupe de l'équipement de la Fig.1 ;
- la Fig.3 est une section transversale d'une couronne de l'équipement supportant à coulissement un connecteur de fibres ;
- la Fig.4 est une vue schématique analogue à la Fig.1 montrant des cheminements de sous-câbles d'entrée ;
- la Fig.5 est une vue schématique analogue à la Fig.1 montrant des boucles de lovage de fibres d'entrée et une reprise de longueur d'une fibre d'entrée en cas d'incident ;
- la Fig.6 est une vue schématique montrant un lovage d'une fibre de sortie vers une première extrémité d'un connecteur dans l'équipement de la Fig.1 et une reprise de longueur de celle-ci en cas d'incident ;
- la Fig.7 est une vue schématique analogue à la Fig.1 montrant des cheminements de fibres de sortie entre des secondes extrémités des connecteurs et des dispositifs d'épanouissement respectifs ;
- la Fig.8 est une vue de dessus d'un équipement analogue à celui de la Fig.1, montrant une variante d'implantation de dispositifs d'épanouissement des fibres optiques d'entrée ;
- la Fig.9 est une vue de dessus d'un équipement analogue à celui de la Fig.1, montrant une autre variante d'implantation de fibres optiques de sortie ;
- la Fig.10 est une vue de dessus schématique d'une aire circulaire centrale de connexion et de lovage, montrant une variante d'implantation des fibres d'entrées ;
- la Fig.11 est une vue transversale schématique montrant une superposition de boucles de lovage de fibres d'entrée selon la variante de la Fig.10 ;
- la Fig.12 est une vue de dessus schématique d'un équipement ayant une capacité relativement faible, selon une autre réalisation ; et
- la Fig.13 est une vue transversale schématique analogue à la Fig.11 et relative à la réalisation de la Fig.12.

Pour les réalisations d'équipements décrites ci-après, on se réfère à des câbles à fibres optiques connus ayant les caractéristiques suivantes.

Un câble élémentaire, pouvant constituer en lui-même un câble indépendant ou un sous-câble d'un multicâble renfermant plusieurs sous-câbles, est composé d'une âme sous la forme d'un jonc ayant une structure cylindrique allongée en matière thermoplastique extrudée. Le jonc enrobe axialement une armature porteuse résistante en acier. Des rainures hélicoïdales parallèles sont régulièrement réparties à la périphérie du jonc. Chaque rainure contient une ou plusieurs fibres optiques qui peuvent être noyées dans de la graisse pour protéger les fibres contre l'humidité. Dans les exemples cités ci-après, le jonc d'un câble élémentaire comporte dix rainures, chaque rainure contenant une ou trois fibres optiques ; ainsi un câble élémentaire comprend 10 fibres optiques ou 3x10 = 30 fibres optiques.

Les fibres optiques ont par exemple un diamètre de coeur de 50 $\mu$m et un diamètre de gaine de 125 $\mu$m. Afin de protéger chaque fibre optique au cours de manipulations de lovage et de raccordement, et notamment afin de faciliter la préhension de chaque fibre lorsque celle-ci sort d'une rainure de jonc contenant de la graisse, chaque fibre optique sortant d'une extrémité dégainée d'un câble est guidée librement dans une gaine de protection en élastomère ayant un diamètre interne de 850 $\mu$m et un diamètre externe de 1450 $\mu$m.

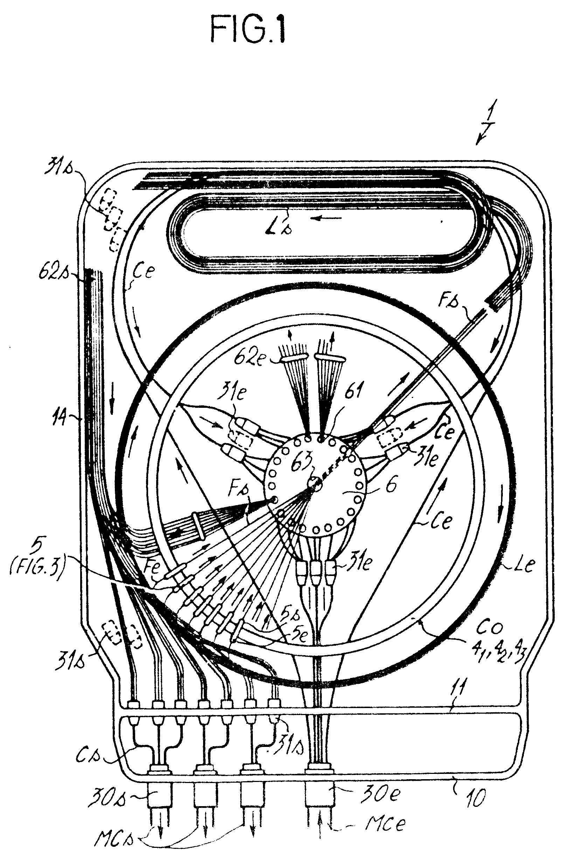

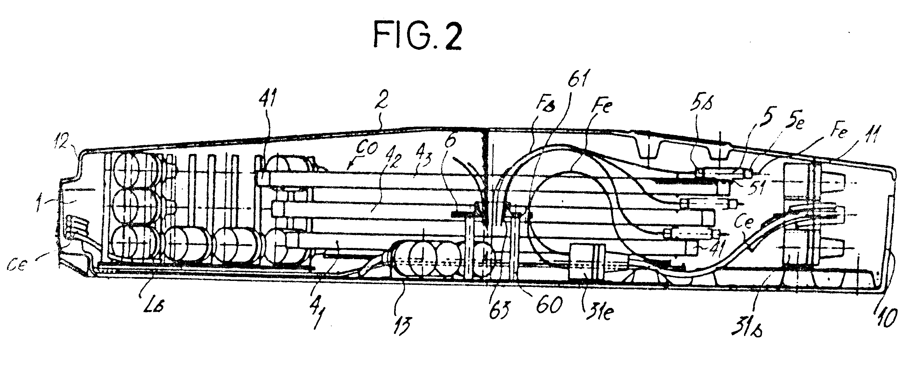

Afin de fixer les idées, on décrit ci-après en détail une réalisation d'un équipement de répartition et de raccordement de fibres optiques ayant une capacité maximale de 210 fibres optiques, c'est-à-dire destiné à raccorder 210 premières fibres optiques Fe dans des premiers câbles, dits câbles d'entrée Ce, respectivement à 210 secondes fibres optiques Fs de seconds câbles, dits câbles de sortie Cs. Selon la réalisation illustrée aux Figs.1 et 2, l'équipement raccorde des fibres optiques dans un multicâble d'entrée MCe comportant 7 sous-câbles Ce ayant chacun un jonc contenant trois fibres optiques par rainure, à des fibres optiques dans un multicâble de sortie MCs comportant trois sous-câbles Cs et dans deux multicâbles de sortie MCs comportant chacun deux sous-câbles Cs. Les sous-câbles d'entrée et de sortie sont identiques et comportent chacun trente fibres optiques.

L'équipement se présente sous la forme d'un coffret composé d'une boîte 1 ayant une forme générale parallélipipédique et d'un couvercle 2 coiffant la boîte. Le couvercle ferme la boîte d'une manière étanche par encliquetage ou autre procédé de fermeture analogue. Comme montré à la Fig.1, la boîte 1 offre une double-paroi 10-11 sur un côté latéral. L'une, 11, des deux parois peut être une cloison rapportée ou non sur le fond de la boîte, ou l'une, 10, des deux parois situées à l'extérieur peut être une paroi rapportée par bridage sur la boîte.

La paroi externe 10 est percée d'orifices pour recevoir des presse-étoupes connus 30e et 30s, tels que manchons en caoutchouc ou en matière plastique, enserrant respectivement des extrémités gainées des multicâbles MCe et MCs afin d'étancher les liaisons entre les multicâbles et la boîte. Dans l'espace délimité par les parois 10 et 11, les sous-câbles Ce et Cs sortent des presse-étoupes 30s et 30e, les gaines des multicâbles étant otées. Les sous-câbles d'entrée Ce traversent en faisceau un orifice central de la paroi interne 11, tandis que des extrémités dégainées avec jonc et armature coupés des sous-câbles de sortie Cs sont fixées à la paroi 11 au moyen de sept dispositifs d'épanouissement de fibres optiques 31s juxtaposés en une rangée horizontale. Les dispositifs d'épanouissement sont de préférence du genre de ceux décrits dans la demande de brevet européen 87-400821.2 déposée le 10 avril 1987 et revendiquant la priorité de la demande de brevet français 86-05523 déposée le 17 avril 1986, non encore publiée. Un dispositif d'épanouissement 31s est en métal ou en partie en matière plastique et sert à épanouir les fibres optiques sortant des dix rainures du jonc coupé d'un sous-câble de sortie Cs et à rendre solidaires ce sous-câble avec des gaines de protection individuelles dans lesquelles ont été enfilées les fibres de sortie. En outre, le dispositif d'épanouissement solidarise l'armature centrale du sous-câble Cs à la boîte 1 grâce à un élément pinçant l'armature. Ainsi, selon la réalisation illustrée aux Figs.1 et 2, la paroi externe 10 joue le rôle d'une platine porte-presse-étoupe, et la paroi interne 11 joue le rôle d'une platine porte-dispositif d'épanouissement.

Comme montré particulièrement à la Fig.1, le long d'un axe longitudinal entre la paroi 11 et une paroi latérale opposée 12, la boîte 1 offre une aire annulaire de connexion C0 et une aire de lovage rectangulaire Ls où sont lovées les fibres de sortie Fs. A l'intérieur de l'aire de connexion C0, d'une part, sont logés des dispositifs d'épanouissement 31e des fibres optiques Fe sortant d'extrémités dégainées à jonc scié des sous-câbles d'entrée Ce, d'autre part, sont rassemblées des extrémités des fibres optiques Fs provenant de connecteurs fibre-à-fibre 5. Extérieurement et concentriquement à l'aire de connexion C0 sont lovées les fibres d'entrée Fe dans une aire circulaire de lovage Le. Dans l'équipement, toutes les courbures auxquelles sont soumis les câbles, les joncs et les fibres ont des rayons excédant le rayon de courbure minimal, de l'ordre de 5 cm, que peut subir une fibre optique sans influencer ses caractéristiques physiques.

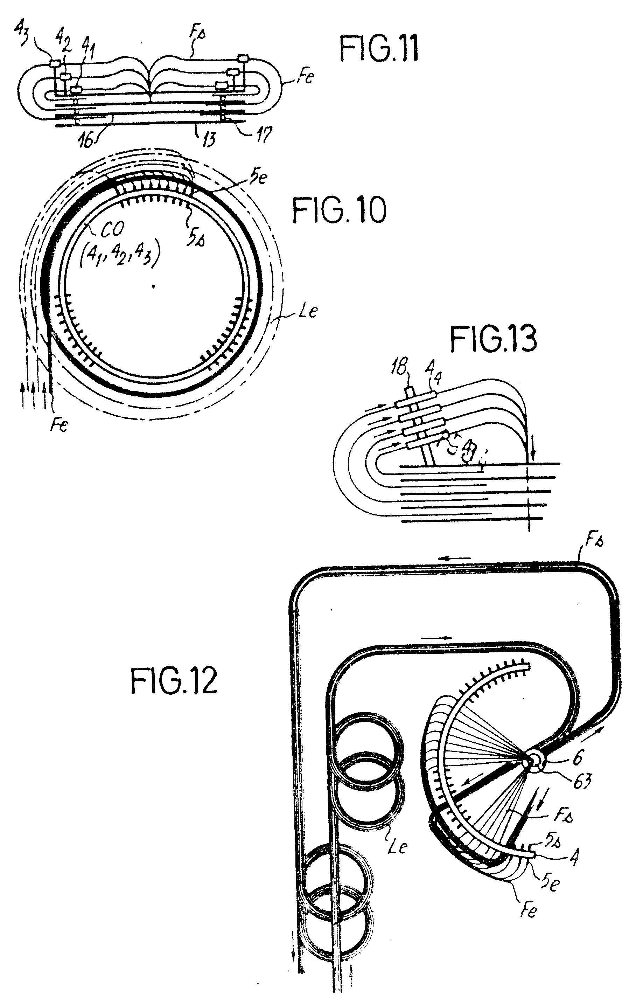

L'aire de connexion C0 contient selon la réalisation illustrée à la Fig.2 trois couronnes concentriques $4_1$, $4_2$ et $4_3$. Les couronnes sont superposées au-dessus du fond 13 de la boîte 1 et ont de préférence des diamètres respectivement croissants à partir du fond afin de faciliter l'accès et la visibilité de l'intérieur des couronnes inférieures $4_1$ et $4_2$. Les couronnes forment ainsi une enveloppe tronconique ou une calotte sphérique évasée en direction du couvercle 2. Les couronnes sont fixées sur le fond 13 au moyen de colonnes 18 inclinées par rapport à la verticale, comme montré par exemple à la Fig.13.

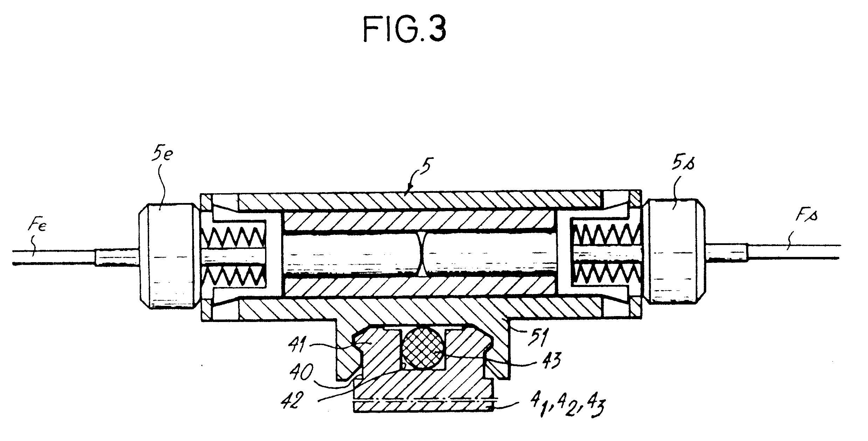

Comme montré à la Fig.3, chaque couronne a une section radiale rectangulaire et offre en partie supérieure deux rainures concentriques latérales 40 afin de constituer une glissière circulaire 41 du type en queue d'aronde contenue ou à section en T. Sur la glissière 41 sont montés à coulissement des connecteurs fibre-à-fibre 5 ayant des embases 51 du type en queue d'aronde contenante, ou à section en U renversé, comme montré à la Fig.3. Au-dessus de l'embase 51, chaque connecteur 5 comporte des moyens connus longitudinaux, tels que des premier et second embouts rainurés en vé 5e et 5s enfilés dans un conduit longitudinal, pour aligner et abouter des extrémités dégainées d'une fibre optique d'entrée Fe et d'une fibre optique de sortie Fs. Comme montré aux Figs.1 et 2, un connecteur 5 est disposé transversalement à la couronne de manière à aligner radialement à la couronne, deux extrémités de fibres Fe et Fs à raccorder. L'extrémité de la fibre d'entrée Fe est introduite dans le connecteur par l'extérieur de la couronne, et l'extrémité de la fibre de sortie Fs est introduite dans le connecteur par l'intérieur de la couronne. En particulier, les connecteurs comprennent des moyens pour solidariser une extrémité de la gaine de protection individuelle de chaque fibre avec le corps du connecteur. Au centre de la glissière 41 est prévue une rainure circulaire rectangulaire 42 pour recevoir un anneau élastique en caoutchouc 43. L'anneau 43 a un diamètre égal à la largeur de la rainure 42 et sensiblement inférieur à la hauteur de celle-ci, afin que l'anneau freine les connecteurs 5 par contact sous les embases 51 et tende à éloigner les embases de la glissière 41 pour immobiliser les connecteurs aux positions choisies sur la couronne. Les couronnes sont en métal, tel qu'aluminium anodisé ou acier inoxydable, ou en matière plastique, et les connecteurs sont en matière plastique ou en acier inoxydable.

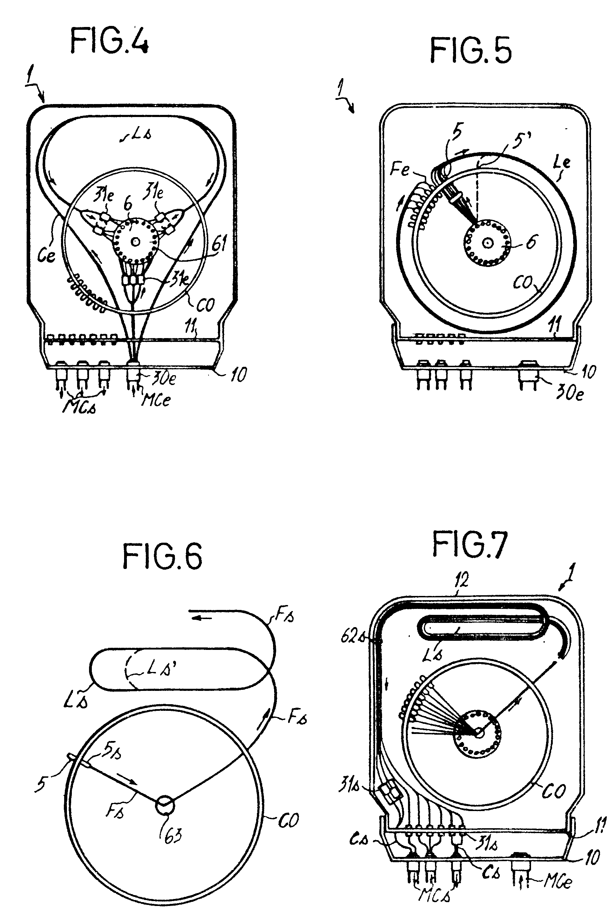

Les Figs.4 et 5 montrent schématiquement les diverses opérations d'acheminement des fibres d'entrée Fe dans le boîtier 1, du presse-étoupe 30e en direction des extrémités 5e des connecteurs 5 orientées vers l'extérieur de l'aire de connexion C0. Les sept sous-câbles Ce sortant de l'orifice central de la paroi interne 11 sont dirigés vers les sept dispositifs d'épanouissement 31e situés à l'intérieur de l'aire C0, et passent sous l'ensemble des couronnes. Trois sous-câbles Ce s'étendent le long de l'axe longitudinal de la boîte jusqu'à un groupe de trois dispositifs d'épanouissement logés également le long de cet axe, entre l'aire C0 et son centre. Deux paires de sous-câbles Ce divergent selon les branches d'un Y à partir de la paroi 11, passent dessous l'aire de connexion C0 et contournent l'aire de lovage Ls suivant des directions opposées pour revenir à l'intérieur de l'aire C0 où sont prévues deux paires de dispositifs d'épanouissement 31e qui sont sensiblement équiréparties avec l'autre groupe de trois dispositifs d'épanouissement, autour du centre de l'aire C0. Les dispositifs d'épanouissement 31e sont identiques aux dispositifs d'épanouissement 31s.

Comme montré en détail aux Figs.1 et 2, au centre de l'aire de connexion C0 est logé un disque de répartition 6. Le disque 6 est fixé parallèlement au fond 13 de la boîte 1 au moyen de colonnes verticales 60, et est situé sensiblement à mi-hauteur de l'ensemble des couronnes, ici au niveau de la couronne intermédiaire $4_2$. Le disque 6 a un diamètre très inférieur à celui des couronnes, typiquement dans un rapport de 1/5 à 1/6 environ, afin de courber sur elles-mêmes les fibres Fe sortant des dispositifs 31e en repassant sous les couronnes, comme montré à la Fig.2. En effet, la périphérie du disque 6 offre une pluralité de petits trous 61 équirépartis circulairement, ayant typiquement un diamètre de 8 mm environ, à travers lesquels des faisceaux de fibres gainées Fe sortant des dispositifs 31e pénètrent respectivement par le dessous du disque. Chaque faisceau comporte typiquement 15 fibres, et les fibres Fe sortant d'un dispositif 31e sont réparties en trois faisceaux selon la réalisation illustrée. Puis, les fibres Fe sont courbées vers le fond 13 pour passer dessous la couronne inférieure $4_1$ et sont maintenues en plusieurs nappes de 10 fibres par des brides 62e, par exemple chacune composée par un assemblage de deux barrettes superposées, cannelées transversalement.

Comme montré à la Fig.5, les nappes des fibres Fe sont lovées autour de l'aire de connexion C0 en des boucles de réserve concentriques Le, chaque nappe étant lovée sensiblement au moins sur une boucle avant d'être introduite dans les premières extrémités 5e de connecteurs respectifs voisins 5 situées à l'extérieur des couronnes. Les fibres Fe sortant de tous les dispositifs d'épanouissement 31e et enfilées dans des gaines de protection individuelles ont des longueurs pratiquement égales, ce qui permet de les préparer aisément avant leur cheminement de part et d'autre de l'aire de connexion C0 et leur introduction dans les connecteurs. En particulier, ceci permet d'équiper les extrémités des fibres Fe d'embouts de connecteurs 5e lorsque les fibres sont rassemblées en faisceaux au-dessus des trous 61 du disque de répartition 6.

Les boucles Le permettent de disposer de surlongueurs de fibres afin de pallier à d'éventuels incidents. En cas d'incident sur une fibre Fe, la longueur du tronçon extrême de la fibre Fe à retirer, nécessaire au remplacement de l'embout 5e du connecteur, est reprise en modifiant le trajet de la fibre, d'un connecteur 5 à un connecteur 5' comme montré à la Fig.5, le trajet circonférentiel de la fibre autour de l'aire C0 demeurant inchangé.

En référence aux Figs.6 et 7, les fibres de sortie Fs épanouies dans les dispositifs d'épanouissement 31s, situés dans la moitié de gauche de la paroi 11 et/ou devant celle-ci selon la réalisation illustrée, sont réunies en nappes superposées de 10 fibres ou plus chacune, au moyen de brides 62s, et cheminent sur le fond 13 de la boîte en contournant l'aire de connexion C0 en direction de l'aire de lovage adjacente à la paroi latérale 12. Dans cette aire chaque nappe est lovée en une boucle oblongue Ls transversale à la boîte, entourée par des nervures ou plots ou analogues sur le fond de la boîte. Selon d'autres variantes, les boucles Ls sont maintenues dans des compartiments minces formés entre des plaques espacées et superposées sur le fond 13 de la boîte. Puis les nappes de fibres Fs passent sous la couronne inférieure $4_1$ pour s'étendre radialement vers l'axe central de l'aire C0. A la verticale d'un trou large évasé 63 localisé au centre du disque de répartition 6 et ayant typiquement un diamètre de 3 cm environ, les fibres Fs protégées par leur gaine de protection remontent au dessus du disque et sont courbées et déployées en "parapluie" pour être introduites avec leurs embouts 5s dans des connecteurs respectifs 5. Typiquement, la longueur des fibres Fs sous gaines de protection, entre les dispositifs 31s et les connecteurs 5 est de l'ordre de 3 mètres.

Les fibres Fs sont ainsi rassemblées dans le trou 63 qui est coaxial aux couronnes $4_1$ à $4_3$ et situé à mi-hauteur de l'ensemble des couronnes ce qui confère des longueurs de fibres Fs entre le trou 63 et les connecteurs 5 sensiblement égales et dans un rapport constant avec le rayon moyen des couronnes. Les connexions des fibres Fs et Fe deux à deux peuvent être choisies et modifiées sans nécessiter une traction sur les fibres Fe et Fs impliquant, selon la technique antérieure, des tractions, courbures et emmêlements indésirables des fibres, grâce au fait que l'embout 5s d'une fibre Fs, ou plus généralement l'extrémité d'une fibre Fs, peut être introduit dans n'importe quel connecteur 5 sur les couronnes en décrivant un arc de cercle autour du trou 63 sans entremêler les fibres. La superposition des couronnes suivant des sections parallèles transversales d'un tronc de cône ou d'une calotte sphérique permet d'accéder facilement aux extrémités des connecteurs situées à l'intérieur des couronnes, y compris au niveau de la couronne inférieure $4_1$. Le coulissement des embases 51 de connecteurs 5 sur les glissières 41 des couronnes permet d'écarter des connecteurs de part et d'autre du connecteur utilisé pour la connexion à effectuer et donc d'y accéder aisément.

En pratique, les fibres d'entrée Fe sont par exemple des supports de transmission provenant d'une station de distribution de vidéotransmission ou d'un autocommutateur, et ont des extrémités enfichées dans des connecteurs quelconques mais repérés une fois pour toutes. Par contre, les fibres de sortie Fs sont généralement destinées à desservir des équipements d'abonné et sont en nombre variable en fonction des besoins d'exploitation et des regroupements géographiques des abonnés. Le brassage des fibres en vue de raccorder une fibre Fs à une fibre Fe s'effectue sur les fibres de sortie en retirant l'embout 5s de la fibre Fs d'un connecteur pour l'insérer dans l'extrémité d'un autre connecteur sans modifier de quelle que manière que ce soit les cheminements et lovage des fibres Fe et Fs.

En cas d'incident sur un connecteur 5, la longueur de la fibre de sortie correspondante Fs utile pour la réalisation d'une nouvelle connexion avec un autre embout 5s est reprise en tirant sur la fibre la longueur désirée dans la boucle de lovage correspondante Ls afin de former une nouvelle boucle de lovage Ls', comme montré à la Fig.6.

Bien que l'invention ait été décrite ci-dessus en référence à une réalisation préférée de l'invention, d'autre réalisations entrant dans l'objet de l'invention peuvent être déduites en dépendance notamment de la capacité des câbles d'entrée et de sortie. Quelques autres réalisations sont décrites ci-après.

Avec l'équipement décrit ci-dessus ayant une capacité de 210 fibres optiques, il est possible de raccorder des fibres optiques d'entrée Fe provenant par exemple :

- d'un multicâble d'entrée comprenant sept sous-câbles d'entrée ayant chacun un jonc à dix rainures contenant chacune 3 fibres, comme illustré à la Fig.1 ; ou
- de deux multicâbles d'entrée à 90 fibres optiques comprenant chacun trois sous-câbles tels que défini ci-dessus, et d'un câble d'entrée analogue à un sous-câble à 30 fibres optiques ; ou
- de deux multicâbles d'entrée à 90 fibres optiques chacun et de trois câbles d'entrée comprenant chacun un jonc à dix rainures contenant chacune une fibre optique ;
    avec des fibres optiques de sortie Fs provenant par exemple :
- de deux multicâbles de sortie à 90 fibres optiques chacun et de trois câbles de sortie à dix fibres optiques chacun; ou
- de combinaisons de câbles de sortie à 5, 10, 15, 20, 25 ou 30 fibres chacun.

Lorsque le nombre des câbles d'entrée et/ou de sortie est élevé, des dispositifs d'épanouissement 31s et/ou 31e sont alors fixés par l'intermédiaire d'équerres sur le fond 13 de la boîte 1, au voisinage de parois longitudinales 14 de la boîte et du disque de répartition 6, comme montré en traits interrompus courts dans la Fig.1.

Selon d'autres variantes ne sont prévues que deux couronnes superposées et concentriques équipées chacune de 105 connecteurs coulissants, ou n'est prévue qu'une couronne ayant un diamètre plus grand et équipée de 210 connecteurs coulissants.

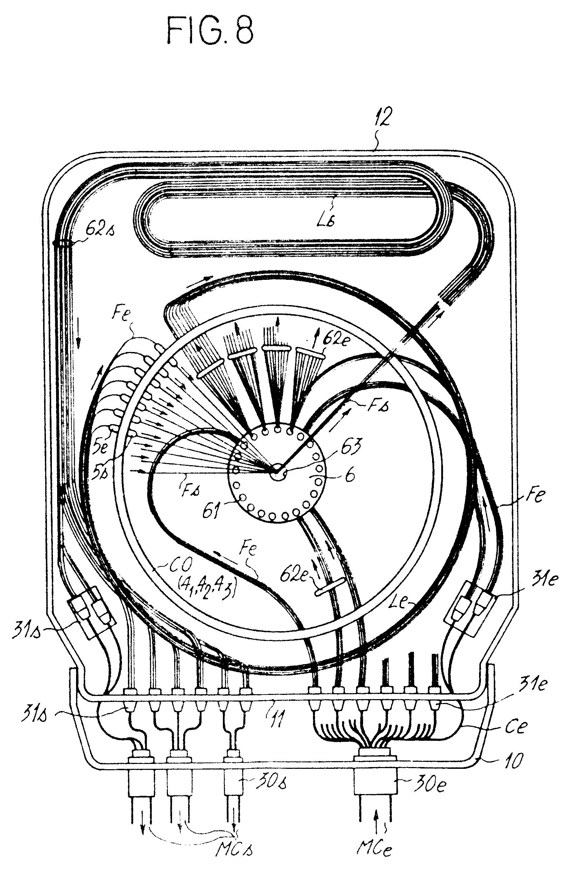

Encore selon une autre variante d'un équipement pour 210 fibres illustrée à la Fig.8, les sous-câbles d'entrée Ce ont des extrémités de jonc coupées introduites dans des dispositifs d'épanouissement 31e qui sont respectivement fixées dans la paroi interne 11 et devant celle-ci. Cette disposition, analogue à celle des dispositifs d'épanouissement 31s, permet de réduire la longueur des joncs des sous-câbles d'entrée, et par suite de libérer le volume de la boîte 1 pour lover les fibres.

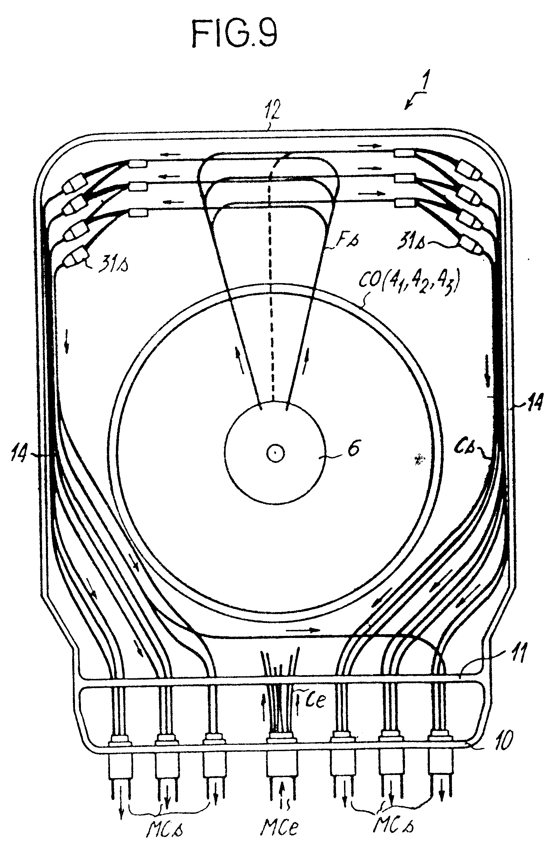

Selon une variante d'implantation des fibres de sortie Fs montré à la Fig.9, les dispositifs d'épanouissement 31s sont logés dans deux encoignures de la boîte 1 adjacentes à la paroi 12 opposée à la paroi 11 traversée par les sous-câbles de sortie Cs. Dans ce cas, les sous-câbles de sortie Cs cheminent le long des parois longitudinales 14 de la boîte, et les fibres de sortie Fs s'étendent parallèlement à la paroi transversale 12 à partir des dispositifs 31s, puis radialement en direction du trou central 63 du disque répartiteur 6. La longueur des fibres de sortie Fs sous gaines de protection est ainsi réduite.

Selon une autre variante de lovage des fibres d'entrée Fe montré à la Fig.10, les fibres d'entrée après leur traversée de la paroi 11 sont directement lovées autour de la zone de connexion C0 en des boucles concentriques ayant des dismètres excédant celui des couronnes $4_1$ à $4_3$, sans traverser la zone C0. De préférence, comme montré à la Fig.11, les boucles de lovage des fibres de sortie sont réparties en nappe dans des compartiments circulaires et superposés formés par des plaques 16 ou des anneaux fixés sur des petites colonnes 17 fixées sur le fond 13 et sous les couronnes. En cas d'incident, la longueur de fibre de sortie nécessaire à l'intervention est reprise en réduisant le diamètre d'enroulement de la portion de fibre lové dans le compartiment respectif.

Selon des secondes réalisations relatives à des équipements ayant une capacité plus réduite, par exemple de 30 à 90 fibres optiques, la ou les couronnes sont remplacées par une ou des glissières 4 superposées et concentriques en arc de cercle, tel que demi-cercle, comme montré aux Figs.12 et 13. Les fibres de sortie Fs sont alors étalées dans des secteurs circulaires des glissières, après avoir traversé le trou 63 du disque répartiteur central 6. Les fibres de sortie Fs et les fibres d'entrée Fe peuvent être lovées en des petites boucles circulaires Ls et Le avant de contourner les glissières en direction du centre, bien que ces boucles de lovage ne soient pas nécessaires si on prend soin d'acheminer les fibres à partir des dispositifs d'épanouissement respectifs suivant un détour relativement long en direction du centre des glissières.

En variante, l'équipement peut comporter plusieurs glissières en arcs de cercle concentriques et coplanaires ; par exemple l'équipement comporte deux glissières en quart de cercle diamètralement opposées, ou trois glissières identiques en sixième de cercle espacées deux-à-deux par un sixième de cercle. Les espaces entre extrémités en regard de glissières voisines facilitent l'accès aux embouts de fibre de sortie 5s.

**Revendications**

1. Equipement pour répartir et raccorder, au moyen de connecteurs fibre-à-fibre longitudinaux montés sur un dispositif de fixation, des premières fibres optiques (Fe) sortant de premiers câbles (Ce) respectivement à des secondes fibres optiques (Fs) sortant de seconds câbles (Cs),

   l'équipement étant caractérise en ce que

   le dispositif de fixation des connecteurs comporte au moins un segment de couronne circulaire ($4_1$, $4_2$, $4_3$),

   les connecteurs (5) sont montés sur ledit segment de couronne ($4_1$, $4_2$, $4_3$) de façon à s'étendre dans son plan, et transversalement à ce segment de façon à pointer vers son centre, les extrémités des premières fibres optiques (Fe) étant introduites dans des premières extrémités (5e) des connecteurs situées à la périphérie externe dudit segment de couronne circulaire, et les extrémités des secondes fibres optiques (Fs) étant introduites dans des secondes extrémités (5s) des connecteurs situées à la périphérie interne, et

   l'équipement comporte en outre un disque de répartition (6) ayant un diamètre inférieur à celui de la couronne et disposé coaxialement avec la couronne, ledit disque comportant un trou central (63) pour rassembler les secondes fibres optiques (Fs) issues desdites secondes extrémités (5s) desdits connecteurs (5).

2. Equipement conforme à la revendication 1, caractérisé en ce que le dispositif de fixation comporte plusieurs segments de couronne ($4_1$, $4_2$, $4_3$) et/ou plusieurs couronnes qui sont coaxiaux et pour partie superposés entre eux et/ou pour partie coplanaires entre eux.

3. Equipement conforme à la revendication 2, caractérisé en ce que les segments de couronne ($4_1$, $4_2$, $4_3$) et/ou les couronnes forment tout ou partie de sections parallèles transversales d'une surface de révolution, telle que celle d'un tronc de cône ou d'une calotte sphérique.

4. Equipement conforme à l'une quelconque des revendications 1 à 3, caractérisé en ce qu'un segment de couronne ($4_1$, $4_2$, $4_3$) est une glissière circulaire (41) sur laquelle sont montés à coulissement des connecteurs (5).

5. Equipement conforme à la revendication 4, caractérisé en ce que la glissière (41) comporte des moyens, tels qu'un anneau élastique (43) concentrique à la glissière, pour freiner des coulissements des connecteurs (5) et immobiliser les connecteurs à des positions quelconques sur la glissière.

6. Equipement conforme à l'une quelconque des revendications 1 à 5, caractérisé en ce que le disque de répartition (6) comprend des trous (61) répartis circulairement dans le disque (6) pour rassembler en faisceaux les premières fibres optiques (Fe) sortant des premiers câbles (Ce).

7. Equipement conforme à la revendication 6, caractérisé en ce qu'il comprend des dispositifs d'épanouissement (31e) situés sensiblement sous la couronne définie par ledit segment de couronne circulaire ($4_1$, $4_2$, $4_3$) pour épanouir les premières fibres (Fe) sortant des premiers câbles (Ce) préalablement à leur rassemblement en faisceaux à travers les trous (61) dudit disque de répartition (6), et des moyens (16, 17, 62e) pour maintenir les faisceaux de premières fibres en des nappes de boucles de lovage (Le) entourant concentriquement ledit segment de couronne ($4_1$, $4_2$, $4_3$).

8. Equipement conforme à la revendication 6, caractérisé en ce qu'il comprend des dispositifs d'épanouissement (31e) situés à l'extérieur de la couronne définie par ledit segment de couronne circulaire ($4_1$, $4_2$, $4_3$), de préférence le long ou au voisinage d'une paroi (11) de l'équipement, pour épanouir les premières fibres (Fe) sortant des premiers câbles (Ce) préalablement à leur rassemblement en faisceaux à travers des trous (61) dudit disque de répartition (6), et des moyens (16, 17, 62e) pour maintenir les faisceaux de premières fibres en des nappes de boucles de lovage (Le) entourant concentriquement ledit segment de couronne ($4_1$, $4_2$, $4_3$).

9. Equipement conforme à l'une quelconque des revendications 1 à 5, caractérisé en ce qu'il comprend des dispositifs d'épanouissements (31e) situés à l'extérieur de la couronne défini par ledit segment de couronne circulaire ($4_1$, $4_2$, $4_3$), de préférence le long ou au voisinage d'une paroi (11) de l'équipement, pour épanouir les premières fibres (Fe) sortant des premiers câbles (Ce), et des moyens (16, 17, 62e) pour maintenir des nappes de boucles de lovage (Le) des premières fibres épanouies entourant concentriquement ldit segment de couronne avant d'être introduites respectivement dans les premières extrémités (5e) des connecteurs (5).

10. Equipement conforme à l'une quelconque des revendications 1 à 9, caractérisé en ce qu'il comprend des dispositifs d'épanouissement (31s) situés à l'extérieur de la couronne défini par ledit segment de couronne circulaire ($4_1$, $4_2$, $4_3$), de préférence le long ou au voisinage d'une paroi (11 ; 12) de l'équipement, pour épanouir les secondes fibres (Fs) sortant des seconds câbles (Cs), et des moyens situés à l'extérieur de ladite couronne pour maintenir les secondes fibres épanouies (Fs) en des nappes de boucles de lovage ou des portions de boucles de lovage (Ls) préalablement à leur rassemblement dans le trou central (63) du disque de répartition (6).

**Claims**

1. Equipment for distributing and connecting first optical fibers (Fe) emerging from first cables (Ce) respectively to second optical fibers (Fs) emerging from second cables (Cs), by means of longitudinal fiber-to-fiber connectors mounted on a fixing device,

the equipment being characterized in that

the connector fixing device comprises at least one circular ring segment ($4_1$, $4_2$, $4_3$),

the connectors (5) are mounted on said ring segment ($4_1$, $4_2$, $4_3$), whereby they extend along his plane, and transversely to this segment whereby they point towards his center, the ends of the first optical fiber (Fe) being introduced in first ends (5e) of the connectors located at the external periphery of said circular ring segment, and the ends of the second optical fiber (Fs) being introduced in second ends (5s) of the connectors located at the internal periphery, and

the equipment further comprises a distribution disk (6) having a lower diameter than that of the ring and coaxially located with the ring, said disk comprising a central hole (63) for gathering the second optical fibers (Fs) emerging from said second ends (5s) of said connectors (5).

2. Equipment according to claim 1, characterized in that the fixing device comprises several ring segments ($4_1$, $4_2$, $4_3$) and/or several rings which are coaxial and partly stacked therebetween and/or partly coplanar therebetween.

3. Equipment according to claim 2, characterized in that the ring segments ($4_1$, $4_2$, $4_3$) and/or the rings form all or part of parallel transverse sections of a revolution surface, such as that of a cone frustrum or a spherical cap.

4. Equipment according to any one of claims 1 to 3, characterized in that a ring segment ($4_1$, $4_2$, $4_3$) is a circular slide (41) on which connectors (5) are slidably mounted.

5. Equipment according to claim 4, characterized in that the slide (41) comprises means, such as an elastic ring (43) concentric with the slide, for braking sliding motions of the connectors (5) and immobilizing the connectors in any given position on the slide.

6. Equipment according to any one of claims 1 to 5, characterized in that the distribution disk (6) comprises holes (61) spread around the disk (6) for grouping the first optical fibers (Fe) emerging from the first cables (Ce) into bundles.

7. Equipment according to claim 6, characterized in that it comprises spreading devices (31e) substantially located under the ring defined by said circular ring segment ($4_1$, $4_2$, $4_3$) for spreading the first fibers (fe) emerging from the first cables (Ce) before gathering into bundles through the holes (61) of said distribution disk (6), and means (16, 17, 62e) for holding the first fibers bundles in arrays of coiled loops (Le) concentrically surrounding said ring segment ($4_1$, $4_2$, $4_3$).

8. Equipment according to claim 6, characterized in that it comprises spreading devices (31e) located outside the ring defined by said circular ring segment ($4_1$, $4_2$, $4_3$), preferably along or close to a wall (11) of the equipment, for spreading the first fibers (Fe) emerging from the first cables (Ce) before gathering into bundles through holes (61) of said distribution disk (6), and means (16, 17, 62e) for holding the first fibers bundles in arrays of coiled loops (Le) concentrically surrounding said ring segment ($4_1$, $4_2$, $4_3$).

9. Equipment according to any one of claims 1 to 5, characterized in that it comprises spreading devices (31e) located outside the ring defined by said circular ring segment ($4_1$, $4_2$, $4_3$), preferably along or close to a wall (11) of the equipment, for spreading the first fibers (Fe) emerging from first cables (Ce), and means (16, 17, 62e) for holding arrays of coiled loops (Le) of the first spread fibers concentrically surrounding said ring segment before being inserted in the first ends (5e) of the connectors (5) respectively.

10. Equipment according to any one of claims 1 to 9, characterized in that it comprises spreading devices (31s) located outside the ring defined by said circular ring segment ($4_1$, $4_2$, $4_3$), preferably along or close to a wall (11; 12) of the equipment, for spreading the second fibers (Fs) emerging from the second cables (Cs), and means located outside said ring for holding the second spread fibers (Fs) into arrays of coiled loops or portions of coiled loops (Ls) before gathering in the central hole (63) of the distribution disk (6).

**Patentansprüche**

1. Vorrichtung zum Verteilen und Verbinden erster optischer Fasern (Fe) aus ersten Kabeln (Ce) mit zweiten optischen Fasern (Fs) aus zweiten Kabeln (Cs) mit Hilfe von longitudinalen Faser-zu-Faser-Verbindungselementen, die auf einer Spannvorrichtung aufgebracht sind, wobei die Vorrichtung dadurch gekennzeichnet ist, daß die Spannvorrichtung der Verbindungselemente mindestens ein kreisringförmiges Segment ($4_1$, $4_2$, $4_3$) aufweist, wobei die Verbindungselemente (5) auf dem kreisringförmigen Segment ($4_1$, $4_2$, $4_3$) so angeordnet sind, daß sie sich in einer Ebene mit ihm erstrecken und quer zu dem Segment auf sein Zentrum zuweisen, und die Enden der ersten optischen Fasern (Fe) in erste Enden (5e) der Verbindungselemente auf der Außenseite des kreisringförmigen Segments und die Enden der zweiten optischen Fasern (Fs) in zweite Enden (5s) der Verbindungselemente auf der Innenseite eingeführt sind, und dadurch, daß die Vorrichtung außerdem eine Verteilerscheibe (6) mit einem kleineren Durchmesser als der des Rings aufweist, die koaxial zum Ring angeordnet ist und eine zentrale Öffnung (63) zum Zusammenführen der zweiten optischen Fasern (Fs), die aus den zweiten Enden (5s) der Verbindungselemente (5) herausgeführt sind, aufweist.

2. Vorrichtung nach Anspruch 1, dadurch gekennzeichnet, daß die Spannvorrichtung mehrere Ringsegmente ($4_1$, $4_2$, $4_3$), und/oder mehrere zueinander koaxiale und sich teilweise überdeckende und/oder teilweise koplanare Ringe aufweist.

3. Vorrichtung nach Anspruch 2, dadurch gekennzeichnet, daß die Ringsegmente ($4_1$, $4_2$, $4_3$) und/oder die Ringe ganz oder teilweise parallele Abschnitte quer zu einer Rotationsfläche, wie die eines Kegelstumpfes oder einer Kalotte, bilden.

4. Vorrichtung nach einem der Ansprüche 1 bis 3, dadurch gekennzeichnet, daß ein Ringsegment ($4_1$, $4_2$, $4_3$) als ringförmige Schiene (41) ausgebildet ist, auf der die Verbindungselemente (5) gleitend angeordnet sind.

5. Vorrichtung nach Anspruch 4, dadurch gekennzeichnet, daß die Schiene (41) Einrichtungen wie einen elastischen, konzentrisch zur Schiene angeordneten Ring zum Abbremsen der Gleitbewegung der Verbindungselemente (5) und zum Festhalten der Verbindungselemente an ihren Positionen auf der Schiene aufweist.

6. Vorrichtung nach einem der Ansprüche 1 bis 5, dadurch gekennzeichnet, daß die Verteilerscheibe (6) kreisförmig auf der Scheibe (6) verteilte Löcher (61) zum Zusammenfassen der ersten optischen Fasern (Fe) aus den ersten Kabeln (Ce) zu Bündeln aufweist.

7. Vorrichtung nach Anspruch 6, dadurch gekennzeichnet, daß sie Auffächervorrichtungen (31e) unter dem durch das kreisringförmige Segment ($4_1$, $4_2$, $4_3$) definierten Ring aufweist, um die ersten Fasern (Fe) aus den ersten Kabeln (Ce) vor ihrer Bündelung in den Löchern (61) der Verteilerscheibe (6) aufzufächern, und Einrichtungen (16, 17, 62e) zum Festhalten der Bündel der ersten Fasern in Bahnen aus Packschlaufen (Le) konzentrisch um das Ringsegment ($4_1$, $4_2$, $4_3$) aufweist.

8. Vorrichtung nach Anspruch 6, dadurch gekennzeichnet, daß sie Auffächervorrichtungen (31e) außerhalb des durch das kreisringförmige Segment ($4_1$, $4_2$, $4_3$) definierten Rings, vorzugsweise entlang oder benachbart zu einer Wand (11) der Vorrichtung zur Auffächerung der ersten optischen Fasern (Fe) aus den ersten Kabeln (Ce) vor ihrer Bündelung in den Löchern (61) der Verteilerscheibe (6) und Einrichtungen (16, 17, 62e) zum Festhalten der Bündel der ersten Fasern in Bahnen von Packschlaufen (Le) um das Ringsegment ($4_1$, $4_2$, $4_3$) aufweist.

9. Vorrichtung nach einem der Ansprüche 1 bis 5, dadurch gekennzeichnet, daß sie Auffächervorrichtungen (31e) außerhalb des durch das kreisförmige Ringsegment ($4_1$, $4_2$, $4_3$) definierten Rings, vorzugsweise entlang oder benachbart zu einer Wand (11) der Vorrichtung zur Auffächerung der ersten optischen Fasern (Fe) aus den ersten Kabeln (Ce) und Einrichtungen (16, 17, 62e) zum Festhalten der Bahnen von Packschlaufen (Le) der ersten aufgefächerten Fasern konzentrisch um das Ringsegment, bevor diese jeweils in die ersten Enden (5e) der Verbindungselemente (5) eingeführt werden, aufweist.

10. Vorrichtung nach einem der Ansprüche 1 bis 9, dadurch gekennzeichnet, daß sie Auffächervorrichtungen (31s) außerhalb des durch das Kreisringsegment ($4_1$, $4_2$, $4_3$) definierten Rings, vorzugsweise entlang oder benachbart zu einer Wand (11; 12) der Vorrichtung zur Auffächerung der zweiten Fasern (Fs) aus den zweiten Kabeln (Cs) und Einrichtungen außerhalb des Rings zum Festhalten der zweiten aufgefächerten Fasern (Fs) in Bahnen aus Packschlaufen oder Teilen von Packschlaufen (Ls) vor ihrer Bündelung in der zentralen Öffnung (63) der Verteilerscheibe (6) aufweist.

# FIG.1

# FIG.2

FIG.3

FIG.4

FIG.5

FIG.6

FIG.7

# FIG. 8

# FIG.9

FIG.11

FIG.10

FIG.13

FIG.12